(19) **Europäisches Patentamt**
**European Patent Office**
**Office européen des brevets**

(11) **EP 1 144 911 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(21) Anmeldenummer: **00902546.1**

(22) Anmeldetag: **10.01.2000**

(51) Int Cl.:
**F22B 21/34** *(2006.01)*

(86) Internationale Anmeldenummer:
**PCT/DE2000/000056**

(87) Internationale Veröffentlichungsnummer:
**WO 2000/042353 (20.07.2000 Gazette 2000/29)**

(54) **FOSSILBEHEIZTER DAMPFERZEUGER**

FOSSIL FUEL FIRED STEAM GENERATOR

GENERATEUR DE VAPEUR CHAUFFE AVEC UN COMBUSTIBLE FOSSILE

(84) Benannte Vertragsstaaten:
**DE DK ES FR GB**

(30) Priorität: **18.01.1999 DE 19901430**

(43) Veröffentlichungstag der Anmeldung:
**17.10.2001 Patentblatt 2001/42**

(73) Patentinhaber: **SIEMENS AKTIENGESELLSCHAFT**
**80333 München (DE)**

(72) Erfinder:
- **FRANKE, Joachim**
  **D-90518 Altdorf (DE)**
- **KRAL, Rudolf**
  **D-91058 Erlangen (DE)**

(56) Entgegenhaltungen:
**WO-A-99/64787**    **FR-A- 724 171**
**GB-A- 1 163 554**    **US-A- 3 043 279**
**US-A- 3 527 261**

Printed by Jouve, 75001 PARIS (FR)

**Beschreibung**

Die Erfindung bezieht sich auf einen Dampferzeuger mit einer Brennkammer für fossilen Brennstoff, gemäß dem Oberbegriff des Anspruchs 1. Ein solcher Dampferzeuger ist aus Dokument US-A-3 527 261 schon bekannt.

Bei einer Kraftwerksanlage mit einem Dampferzeuger wird der Energiegehalt eines Brennstoffs zur Verdampfung von einem Strömungsmedium im Dampferzeuger genutzt. Der Dampferzeuger weist zur Verdampfung des Strömungsmediums Verdampferrohre auf, deren Beheizung zu einer Verdampfung des darin geführten Strömungsmediums führt. Der durch den Dampferzeuger bereitgestellte Dampf wiederum kann beispielsweise für einen angeschlossenen externen Prozeß oder aber für den Antrieb einer Dampfturbine vorgesehen sein. Treibt der Dampf eine Dampfturbine an, so wird über die Turbinenwelle der Dampfturbine üblicherweise ein Generator oder eine Arbeitsmaschine betrieben. Im Falle eines Generators kann der durch den Generator erzeugte Strom zur Einspeisung in ein Verbund- und/oder Inselnetz vorgesehen sein.

Der Dampferzeuger kann dabei als Durchlaufdampferzeuger ausgebildet sein. Ein Durchlaufdamferzeuger ist aus dem Aufsatz "Verdampferkonzepte für Benson-Dampferzeuger" von J. Franke, W. Köhler und E. Wittchow, veröffentlicht in VGB Kraftwerkstechnik 73 (1993), Heft 4, S. 352-360, bekannt. Bei einem Durchlaufdampferzeuger führt die Beheizung von als Verdampferrohren vorgesehenen Dampferzeugerrohren zu einer Verdampfung des Strömungsmediums in den Dampferzeugerrohren in einem einmaligen Durchlauf.

Dampferzeuger werden üblicherweise mit einer Brennkammer in vertikaler Bauweise ausgeführt. Dies bedeutet, daß die Brennkammer für eine Durchströmung des beheizenden Mediums oder Heizgases in annähernd vertikaler Richtung ausgelegt ist.

Heizgasseitig kann der Brennkammer dabei ein Horizontalgaszug nachgeschaltet sein, wobei beim Übergang von der Brennkammer in den Horizontalgaszug eine Umlenkung des Heizgasstroms in eine annähernd horizontale Strömungsrichtung erfolgt. Derartige Brennkammern erfordern jedoch im allgemeinen aufgrund der temperaturbedingten Längenänderungen der Brennkammer ein Gerüst, an dem die Brennkammer aufgehängt wird. Dies bedingt einen erheblichen technischen Aufwand bei der Herstellung und Montage des Dampferzeugers, der um so größer ist, je größer die Bauhöhe des Dampferzeugers ist.

Ein besonderes Problem stellt die Auslegung der Umfassungswand des Gaszuges oder Brennkammer des Dampferzeugers im Hinblick auf die dort auftretenden Rohrwand- oder Materialtemperaturen dar. Im unterkritischen Druckbereich bis etwa 200 bar wird die Temperatur der Umfassungswand der Brennkammer im wesentlichen von der Höhe der Sättigungstemperatur des Wassers bestimmt, wenn eine Benetzung der Innenoberfläche der Verdampferrohre sichergestellt werden kann. Dies wird beispielsweise durch die Verwendung von Verdampferrohren erzielt, die auf ihrer Innenseite eine Oberflächenstruktur aufweisen. Dazu kommen insbesondere innberippte Verdampferrohre in Betracht, deren Einsatz in einem Durchlaufdampferzeuger beispielsweise aus dem oben zitierten Aufsatz bekannt ist. Diese sogenannten Rippenrohre, d.h. Rohre mit einer berippten Innenoberfläche, haben einen besonders guten Wärmeübergang von der Rohrinnenwand zum Strömungsmedium.

Erfahrungsgemäß läßt es sich nicht vermeiden, daß die Umfassungswände der Brennkammer unterschiedlich beheizt werden. Aufgrund der unterschiedlichen Beheizung der Verdampferrohre liegen die Austrittstemperaturen des Strömungsmediums aus mehrbeheizten Verdampferrohren daher wesentlich höher als bei normal- oder minderbeheizten Verdampferrohren. Dadurch können Temperaturdifferenzen zwischen benachbarten Verdampferrohren entstehen, die zu Wärmespannungen führen, welche die Lebensdauer des Dampferzeugers herabsetzen oder sogar Rohrreißer verursachen können.

Der Erfindung liegt daher die Aufgabe zugrunde, einen fossilbeheizten Dampferzeuger der oben genannten Art anzugeben, der einen besonders geringen Herstellungs- und Montageaufwand erfordert, und bei dem gleichzeitig Temperaturunterschiede zwischen benachbarten Verdampferrohren beim Betrieb des Dampferzeugers besonders gering gehalten sind.

Diese Aufgabe wird erfindungsgemäß durch die Merkmale des Anspruchs 1 gelöst.

Die Erfindung geht von der Überlegung aus, daß ein mit besonders geringem Herstellungs- und Montageaufwand erstellbarer Dampferzeuger eine mit einfachen Mitteln ausführbare Aufhängekonstruktion aufweisen sollte. Ein mit vergleichsweise geringem technischem Aufwand zu erstellendes Gerüst für die Aufhängung der Brennkammer kann dabei einhergehen mit einer besonders geringen Bauhöhe des Dampferzeugers. Eine besonders geringe Bauhöhe des Dampferzeugers ist erzielbar, indem die Brennkammer in horizontaler Bauweise ausgeführt ist. Hierzu sind die Brenner in der Höhe des Horizontalgaszugs in der Brennkammerwand angeordnet. Somit wird die Brennkammer beim Betrieb des Dampferzeugers in annähernd horizontaler Richtung von dem Heizgas durchströmt.

Beim Betrieb der horizontalen Brennkammer sollten außerdem Temperaturunterschiede zwischen benachbarten Verdampferrohren besonders gering sein, um vorzeitige Materialermüdungen zuverlässig zu vermeiden. Bei einer horizontalen Brennkammer wird nun aber beim Betrieb des Durchlaufdampferzeugers der heizgasseitig gesehen hintere Bereich der Brennkammer vergleichsweise geringer als der heizgasseitig gesehen vordere Bereich der Brennkammer beheizt. Außerdem wird beispielsweise ein Verdampferrohr in Brennernähe mehrbeheizt als ein in einer Brennkammerecke angeordnetes Verdampferrohr. Dabei kann im Extremfall im vorderen Bereich der Brennkammer die Wärmestromdichte etwa dreimal größer sein als im hinteren Bereich.

Bei den bisher üblichen Massenstromdichten - angegeben in kg/m$^2$s und bezogen auf 100% Dampfleistung (Vollast) - von 2000 kg/m$^2$s geht der Massendurchsatz in einem mehr beheizten Rohr zurück und steigt in einem minderbeheizten Rohr an, jeweils bezogen auf den Mittelwert des Massendurchsatzes aller Rohre. Dieses Verhalten wird durch den relativ hohen Anteil des Reibungsdruckverlusts am gesamten Druckabfall der Verdampferrohre verursacht. Außerdem sind die relativen Längenunterschiede der Verdampferrohre aufgrund der besonders niedrigen Höhe der horizontalen Brennkammer wesentlich größer als bei einer vertikalen Brennkammer. Dies verstärkt zusätzlich die Unterschiede in der Beheizung und im Reibungsdruckverlust der einzelnen Verdampferrohre. Um dennoch annähernd gleiche Temperaturen zwischen benachbarten Verdampferrohren sicherzustellen, ist vorteilhafterweise eine Anzahl der Verdampferrohre der Brennkammer in eine erste Gruppe und in eine zweite Gruppe unterteilt. Dabei ist die erste Gruppe von strömungsmediumsseitig parallel geschalteten Verdampferrohren mit der zweiten Gruppe von strömungsmediumsseitig parallel geschalteten Verdampferrohren in Bezug auf das Strömungsmedium in Reihe geschaltet.

Bei einer Reihenschaltung der ersten Gruppe der Verdampferrohre mit der zweiten Gruppe der Verdampferrohre erweist es sich als vorteilhaft, wenn die Brennkammer entlang der Hauptströmungsrichtung des Heizgases in einen ersten und in einen zweiten Bereich unterteilt ist, wobei der erste Bereich aus Verdampferrohren der ersten Gruppe und der zweite Bereich aus Verdampferrohren der zweiten Gruppe gebildet ist. Dabei ist der zweite Bereich heizgasseitig zwischen dem ersten Bereich und dem Horizontalgaszug angeordnet. Denn der mit Strömungsmedium beaufschlagte Eintrittsabschnitt der Verdampferrohre des ersten Bereichs weist beim Betrieb des Dampferzeugers eine vergleichsweise geringere Temperatur auf als der Eintrittsabschnitt der Verdampferrohre des zweiten Bereichs. Der zweite Bereich wird nämlich aufgrund der Reihenschaltung der der Verdampferrohre mit Strömungsmedium beaufschlagt, das bereits durch den ersten Bereich hindurchgetreten ist. Ebenso weist der Eintrittsabschnitt des Horizontalgaszugs eine vergleichsweise geringere Temperatur auf als der Eintrittsabschnitt des zweiten Bereichs der Brennkammer. Durch die Unterteilung der Brennkammer in Bereiche, deren Verdampferrohre entlang der Hauptströmungsrichtung des Heizgases parallel geschaltet sind, fallen Temperaturdifferenzen zwischen benachbarten Verdampferrohren beim Betrieb des Dampferzeugers besonders gering aus.

Vorteilhafterweise ist der ersten Gruppe und der zweiten Gruppe der Verdampferrohre jeweils für das Strömungsmedium ein gemeinsames Eintrittssammler-System vorgeschaltet und ein gemeinsames Austrittssammler-System nachgeschaltet. Ein in dieser Ausgestaltung ausgeführter Dampferzeuger ermöglicht einen zuverlässigen Druckausgleich zwischen den parallel geschalteten Verdampferrohren und somit eine besonders günstige Verteilung des Strömungsmediums bei der Durchströmung der Verdampferrohre.

Eine Umfassungswand der Brennkammer ist vorteilhafterweise die Stirnwand, deren Verdampferrohre parallel mit Strömungsmedium beaufschlagbar sind.

Die Verdampferrohre der Stirnwand der Brennkammer sind vorteilhafterweise strömungsmediumsseitig der ersten Gruppe der Verdampferrohre der Brennkammer vorgeschaltet. Dadurch ist eine besonders günstige Kühlung der Stirnwand gewährleistet.

In einer weiteren vorteilhaften Ausgestaltung ist der Rohrinnendurchmesser einer Anzahl der Verdampferrohre der Brennkammer abhängig von der jeweiligen Position der Verdampferrohre in der Brennkammer gewählt. Auf diese Weise sind die Verdampferrohre in der Brennkammer an ein gasseitig vorgebbares Beheizungsprofil anpaßbar. Mit dem hierdurch bewirkten Einfluß auf die Durchströmung der Verdampferrohre sind besonders zuverlässig Temperaturunterschiede am Auslaß der Verdampferrohre der Brennkammer gering gehalten.

Für eine besonders gute Wärmeübertragung von der Wärme der Brennkammer auf das in den Verdampferrohren geführte Strömungsmedium weist vorteilhafterweise eine Anzahl der Verdampferrohre auf ihrer Innenseite jeweils ein mehrgängiges Gewinde bildende Rippen auf. Dabei ist vorteilhafterweise ein Steigungswinkel $\alpha$ zwischen einer zur Rohrachse senkrechten Ebene und den Flanken der auf der Rohrinnenseite angeordneten Rippen kleiner als 60°, vorzugsweise kleiner als 55°.

In einem beheizten, als Verdampferrohr ohne Innenberippung, einem sogenannten Glattrohr, ausgeführten Verdampferrohr kann nämlich von einem bestimmten Dampfgehalt an die für einen besonders guten Wärmeübergang erforderliche Benetzung der Rohrwand nicht mehr aufrechterhalten werden. Bei fehlender Benetzung kann eine stellenweise trockene Rohrwand vorliegen. Der Übergang zu einer derartigen trockenen Rohrwand führt zu einer Art Wärmeübergangskrise mit verschlechtertem Wärmeübergangsverhalten, so daß im allgemeinen die Rohrwandtemperaturen an dieser Stelle besonders stark ansteigen. In einem innenberippten Rohr tritt aber nun im Vergleich zu einem Glattrohr diese Krise des Wärmeübergangs erst bei einem Dampfmassengehalt > 0,9, also kurz vor dem Ende der Verdampfung, auf. Das ist auf den Drall zurückzuführen, den die Strömung durch die spiralförmigen Rippen erfährt. Aufgrund der unterschiedlichen Zentrifugalkraft wird der Wasser- vom Dampfanteil separiert und an die Rohrwand gedrückt. Dadurch wird die Benetzung der Rohrwand bis zu hohen Dampfgehalten aufrechterhalten, so daß am Ort der Wärmeübergangskrise bereits hohe Strömungsgeschwindigkeiten vorliegen. Das bewirkt trotz der Wärmeübergangskrise einen guten Wärmeübergang und als Folge niedrige Rohrwandtemperaturen.

Eine Anzahl der Verdampferrohre der Brennkammer weist vorteilhafterweise Mittel zum Reduzieren des Durchflusses des Strömungsmediums auf. Dabei erweist es sich als besonders günstig, wenn die Mittel als Drosseleinrichtungen ausgebildet sind. Drosseleinrichtungen können beispielsweise Einbauten in die Verdampferrohre sein, die an einer Stelle im Inneren des jeweiligen Verdampferrohres den Rohrinnendurchmesser verkleinern.

Dabei erweisen sich auch Mittel zum Reduzieren des Durchflusses in einem mehrere parallele Leitungen umfassenden Leitungssystem als vorteilhaft, durch das den Verdampferrohren der Brennkammer Strömungsmedium zuführbar ist. Dabei kann das Leitungssystem auch einem Eintrittssammler-System von parallel mit Strömungsmedium beaufschlagbaren Verdampferrohren vorgeschaltet sein. In einer Leitung oder in mehreren Leitungen des Leitungssystems können dabei beispielsweise Drosselarmaturen vorgesehen sein. Mit solchen Mitteln zum Reduzieren des Durchflusses des Strömungsmediums durch die Verdampferrohre läßt sich eine Anpassung des Durchsatzes des Strömungsmediums durch einzelne Verdampferrohre an deren jeweilige Beheizung in der Brennkammer herbeiführen. Dadurch sind zusätzlich Temperaturunterschiede des Strömungsmediums am Austritt der Verdampferrohre besonders zuverlässig besonders gering gehalten.

Die Seitenwände des Horizontalgaszugs und/oder des Vertikalgaszugs sind vorteilhafterweise aus gasdicht miteinander verschweißten, vertikal angeordneten, jeweils parallel mit Strömungsmedium beaufschlagbaren Dampferzeugerrohren gebildet.

Benachbarte Verdampfer- bzw. Dampferzeugerrohre sind vorteilhafterweise über Metallbänder, sogenannte Flossen, gasdicht miteinander verschweißt. Die Flossenbreite beeinflußt den Wärmeeintrag in die Dampferzeugerrohre. Daher ist die Flossenbreite vorzugsweise abhängig von der Position der jeweiligen Verdampfer- bzw. Dampferzeugerrohre im Dampferzeuger an ein gasseitig vorgebbares Beheizungsprofil angepaßt. Als Beheizungsprofil kann dabei ein aus Erfahrungswerten ermitteltes typisches Beheizungsprofil oder auch eine grobe Abschätzung, wie beispielsweise ein stufenförmiges Beheizungsprofil, vorgegeben sein. Durch die geeignet gewählten Flossenbreiten ist auch bei stark unterschiedlicher Beheizung verschiedener Verdampfer- bzw. Dampferzeugerrohre ein Wärmeeintrag in alle Verdampfer- bzw. Dampferzeugerrohre derart erreichbar, daß Temperaturunterschiede am Auslaß der Verdampfer- bzw. Dampferzeugerrohre besonders gering gehalten sind. Auf diese Weise sind vorzeitige Materialermüdungen zuverlässig verhindert. Dadurch weist der Dampferzeuger eine besonders lange Lebensdauer auf.

In dem Horizontalgaszug sind vorteilhafterweise eine Anzahl von Überhitzerheizflächen angeordnet, die annähernd senkrecht zur Hauptströmungsrichtung des Heizgases angeordnet und deren Rohre für eine Durchströmung des Strömungsmediums parallel geschaltet sind. Diese in hängender Bauweise angeordneten, auch als Schottheizflächen bezeichneten, überhitzerheizflächen werden überwiegend konvektiv beheizt und sind strömungsmediumsseitig den Verdampferrohren der Brennkammer nachgeschaltet. Hierdurch ist eine besonders günstige Ausnutzung der Heizgaswärme gewährleistet.

Vorteilhafterweise weist der Vertikalgaszug eine Anzahl von Konvektionsheizflächen auf, die aus annähernd senkrecht zur Hauptströmungsrichtung des Heizgases angeordneten Rohren gebildet sind. Diese Rohre einer Konvektionsheizfläche sind für eine Durchströmung des Strömungsmediums parallel geschaltet. Auch diese Konvektionsheizflächen werden überwiegend konvektiv beheizt.

Um weiterhin eine besonders vollständige Ausnutzung der Wärme des Heizgases zu gewährleisten, weist der Vertikalgaszug vorteilhafterweise einen Economizer auf.

Vorteilhafterweise sind die Brenner an der Stirnwand der Brennkammer angeordnet, also an derjenigen Umfassungswand der Brennkammer, die der Abströmöffnung zum Horizontalgaszug gegenüberliegt. Ein derartig ausgebildeter Dampferzeuger ist auf besonders einfache Weise an die Ausbrandlänge des Brennstoffs anpaßbar. Unter Ausbrandlänge des Brennstoffs ist dabei die Heizgasgeschwindigkeit in horizontaler Richtung bei einer bestimmten mittleren Heizgastemperatur multipliziert mit der Ausbrandzeit $t_A$ des Brennstoffs zu verstehen. Die für den jeweiligen Dampferzeuger maximale Ausbrandlänge ergibt sich dabei bei der Dampfleistung des Dampferzeugers bei Vollast, dem sogenannten Vollastbetrieb des Dampferzeugers. Die Ausbrandzeit $t_A$ wiederum ist die Zeit, die beispielsweise ein Kohlenstaubkorn mittlerer Größe benötigt, um bei einer bestimmten mittleren Heizgastemperatur vollständig auszubrennen.

Um Materialschäden und eine unerwünschte Verschmutzung des Horizontalgaszuges, beispielsweise aufgrund des Eintrags von schmelzflüssiger Asche einer hohen Temperatur, besonders gering zu halten, ist die durch den Abstand von der Stirnwand zum Eintrittsbereich des Horizontalgaszuges definierte Länge L der Brennkammer vorteilhafterweise mindestens gleich der Ausbrandlänge des Brennstoffs beim Vollastbetrieb des Dampferzeugers. Diese Länge L der Brennkammer wird im allgemeinen größer als die Höhe der Brennkammer, gemessen von der Trichteroberkante bis zur Brennkammerdecke, betragen.

Die Länge L (angegeben in m) der Brennkammer ist zur besonders günstigen Ausnutzung der Verbrennungswärme des fossilen Brennstoffs in einer vorteilhaften Ausgestaltung als Funktion des BMCR-Wertes W (angegeben in kg/s) des Dampferzeugers, der Ausbrandzeit $t_A$ (angegeben in s) des Brennstoffs und der Austrittstemperatur $T_{BRK}$ (angegeben in °C) des Heizgases aus der Brennkammer gewählt. BMCR steht für Boiler maximum continuous rating und ist der international üblicherweise verwendete Begriff für die höchste Dauerleistung eines Dampferzeugers. Diese entspricht auch der Auslegungsleistung, also der Leistung bei Vollastbetrieb des Dampferzeugers. Dabei gilt bei gegebenem BMCR-Wert W des Dampferzeugers für die Länge L der Brennkammer näherungsweise der größere Wert der beiden Funktionen (1) und (2):

$$L\ (W,\ t_A)\ =\ (C_1\ +\ C_2\ \cdot\ W)\ \cdot\ t_A \tag{1}$$

und

$$L\ (W,\ T_{BRK})\ =\ (C_3\ \cdot\ T_{BRK}\ +\ C_4)\,W\ +\ C_5\,(T_{BRK})^2\ +\ C_6\ \cdot\ T_{BRK}\ +\ C_7 \tag{2}$$

mit

$C_1 = 8$ m/s und
$C_2 = 0{,}0057$ m/kg und
$C_3 = -1{,}905 \cdot 10^{-4}$ (m $\cdot$ s) / (kg°C) und
$C_4 = 0{,}286$ (s $\cdot$ m) / kg und
$C_5 = 3 \cdot 10^{-4}$ m/ (°C)$^2$ und
$C_6 = -0{,}842$ m/°C und
$C_7 = 603{,}41$ m.

Unter "näherungsweise" ist hierbei eine zulässige Abweichung vom durch die jeweilige Funktion definierten Wert um +20%/-10% zu verstehen.

Die mit der Erfindung erzielten Vorteile bestehen insbesondere darin, daß durch die Reihenschaltung der ersten Gruppe der Verdampferrohre mit der zweiten Gruppe der Verdampferrohre auch in einer horizontalen Brennkammer besonders geringe Temperaturunterschiede beim Betrieb des Dampferzeugers zwischen benachbarten Verdampferrohren gewährleistet sind. Dabei ist die Länge der Brennkammer so ausgelegt, daß eine besonders günstige Ausnutzung der Verbrennungswärme des fossilen Brennstoffs gewährleistet ist. Durch die Auslegung der Brennkammer für eine Durchströmung des Heizgases in annähernd horizontaler Richtung ist außerdem eine besonders kompakte Bauweise des Dampferzeugers gegeben. Dies ermöglicht bei Einbindung des Dampferzeugers in eine Dampfturbinenanlage besonders kurze Verbindungsrohre von dem Dampferzeuger zu der Dampfturbine.

Ein Ausführungsbeispiel der Erfindung wird anhand einer Zeichnung näher erläutert. Darin zeigen:

FIG 1    schematisch einen fossil beheizten Dampferzeuger in Zweizugbauart in Seitenansicht und

FIG 2    schematisch einen Längsschnitt durch ein einzelnes Verdampferrohr und

FIG 3    ein Koordinatensystem mit den Kurven $K_1$ bis $K_6$.

Einander entsprechende Teile sind in allen Figuren mit den gleichen Bezugszeichen versehen.

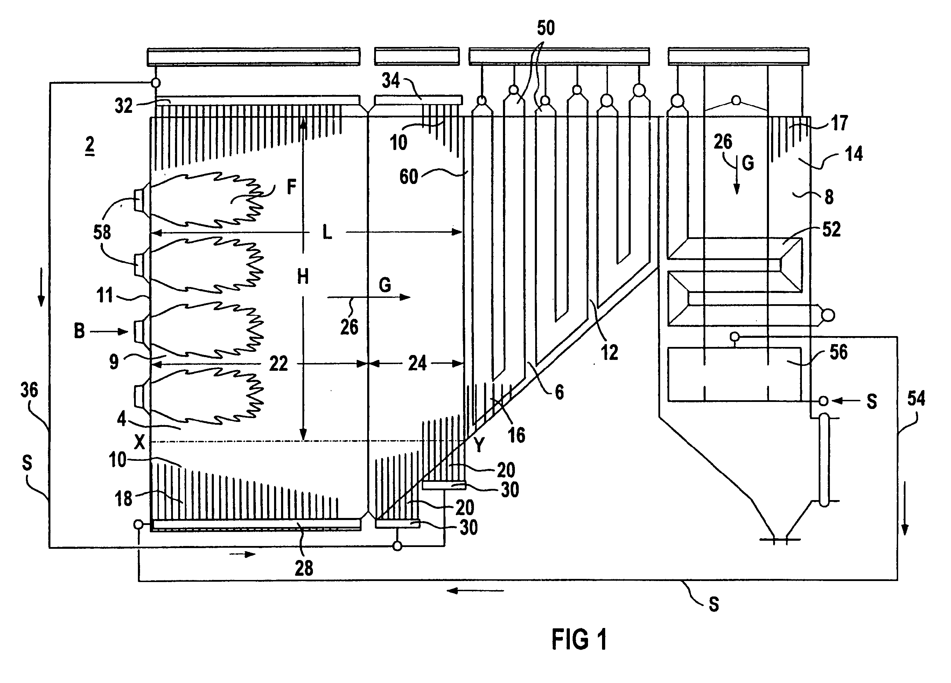

Der Dampferzeuger 2 gemäß Figur 1 ist einer nicht näher dargestellten Kraftwerksanlage zugeordnet, die auch eine Dampfturbinenanlage umfaßt. Der im Dampferzeuger erzeugte Dampf wird dabei zum Antrieb der Dampfturbine genutzt, die ihrerseits wiederum einen Generator zur Stromerzeugung antreibt. Der durch den Generator erzeugte Strom ist dabei zur Einspeisung in ein Verbund- oder ein Inselnetz vorgesehen. Weiterhin kann auch eine Abzweigung einer Teilmenge des Dampfs zur Einspeisung in einen an die Dampfturbinenanlage angeschlossenen externen Prozeß vorgesehen sein, bei dem es sich auch um einen Heizprozeß handeln kann.

Der fossil beheizte Dampferzeuger 2 ist vorteilhafterweise als Durchlaufdampferzeuger ausgeführt. Er umfaßt eine Brennkammer 4, der heizgasseitig über einen Horizontalgaszug 6 ein Vertikalgaszug 8 nachgeschaltet ist.

Die Umfassungswände 9 der Brennkammer 4 sind aus gasdicht miteinander verschweißten, vertikal angeordneten Verdampferrohren 10 gebildet. Dabei ist eine Umfassungswand 9 die Stirnwand 11 der Brennkammer 4 des Dampferzeugers 2. Zusätzlich können auch die Seitenwände 12 des Horizontalgaszuges 6 und/oder die Seitenwände 14 des Vertikalgaszuges 8 aus gasdicht miteinander verschweißten, vertikal angeordneten Dampferzeugerrohren 16 bzw. 17 gebildet sein. In diesem Fall sind die Dampferzeugerrohre 16, 17 jeweils parallel mit Strömungsmedium S beaufschlagbar.

Eine Anzahl der Verdampferrohre 10 der Umfassungswände 9 der Brennkammer 4 sind zudem in eine erste Gruppe 18 und in eine zweite Gruppe 20 unterteilt. Hierbei sind die Verdampferrohre 10 einer Gruppe 18 bzw. 20 jeweils parallel mit Strömungsmedium S beaufschlagbar. Dabei ist die erste Gruppe 18 der Verdampferrohre 10 in einem ersten Bereich 22 der Brennkammer 4 und die zweite Gruppe 20 der Verdampferrohre 10 in einem zweiten Bereich 24 der Brennkammer 4 angeordnet. Der zweite Bereich 24 der Brennkammer 4 ist hierbei in Bezug auf die annähernd horizontale Hauptströmungsrichtung 26 des Heizgases G zwischen dem ersten Bereich 22 der Brennkammer 4 und dem Horizontalgaszug 6 angeordnet.

Der ersten Gruppe 18 und der zweiten Gruppe 20 der Verdampferrohre 10 der Brennkammer 4 ist strömungsmediumsseitig jeweils ein Eintrittssammler-System 28 bzw. 30 für Strömungsmedium S vorgeschaltet und jeweils ein Austrittssammler-System 32 bzw. 34 nachgeschaltet. Dabei ist das Austrittssammler-System 32 der ersten Gruppe 18 der Verdampferrohre 10 über ein Leitungssystem 36 mit dem Eintrittssammler-System 30 der zweiten Gruppe 20 der Verdampferrohre 10 verbunden. Durch die Sammler-Systeme 28, 30 bzw. 30, 34 ist ein Druckausgleich zwischen den parallel geschalteten Verdampferrohre 10 möglich, der eine günstige Verteilung des Strömungsmediums S bei der Durchströmung der Verdampferrohre 10 bewirkt.

Um eine besonders günstige Durchflußcharakteristik des Strömungsmediums S durch die Umfassungswände 9 der Brennkammer 4 und damit eine besonders gute Ausnutzung der Verbrennungswärme des fossilen Brennstoffs B zu erreichen, sind die parallel mit Strömungsmedium S beaufschlagbaren Verdampferrohre 10 der Stirnwand 11 der Brennkammer 4 strömungsmediumsseitig der ersten Gruppe 18 der Verdampferrohre 10 der Brennkammer 4 vorgeschaltet.

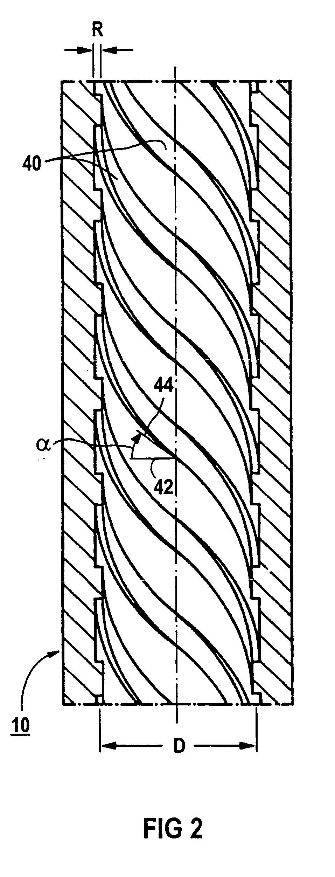

Die Verdampferrohre 10 weisen - wie in Figur 2 dargestellt - auf ihrer Innenseite Rippen 40 auf, die eine Art mehrgängiges Gewinde bilden und eine Rippenhöhe R haben. Dabei ist der Steigungswinkel $\alpha$ zwischen einer zur Rohrachse senkrechten Ebene 42 und den Flanken 44 der auf der Rohrinnenseite angeordneten Rippen 40 kleiner als 55°. Dadurch werden ein besonders hoher Wärmeübergang von der Innenwand der Verdampferrohre an das in den Verdampferrohren 10 geführte Strömungsmedium S bei gleichzeitig besonders niedrigen Temperaturen der Rohrwand erreicht.

Der Rohrinnendurchmesser D der Verdampferrohre 10 der Brennkammer 4 ist abhängig von der jeweiligen Position der Verdampferrohre 10 in der Brennkammer 4 gewählt. Auf diese Weise ist der Dampferzeuger 2 an die unterschiedlich starke Beheizung der Verdampferrohre 10 angepaßt. Diese Auslegung der Verdampferrohre 10 der Brennkammer 4 gewährleistet besonders zuverlässig, daß Temperaturunterschiede am Auslaß der Verdampferrohre 10 besonders gering gehalten sind.

Benachbarte Verdampfer- bzw. Dampferzeugerrohre 10, 16, 17 sind in nicht näher dargestellter Weise über Flossen gasdicht miteinander verschweißt. Durch eine geeignete Wahl der Flossenbreite kann nämlich die Beheizung der Verdampfer- bzw. Dampferzeugerrohre 10, 16, 17 beeinflußt werden. Daher ist die jeweilige Flossenbreite an ein gasseitig vorgebbares Beheizungsprofil angepaßt, das von der Position der jeweiligen Verdampfer- bzw. Dampferzeugerrohre 10, 16, 17 im Dampferzeuger abhängt. Das Beheizungsprofil kann dabei ein aus Erfahrungswerten ermitteltes typisches Beheizungsprofil oder auch eine grobe Abschätzung sein. Dadurch sind Temperaturunterschiede am Auslaß der Verdampfer- bzw. Dampferzeugerrohre 10, 16, 17 auch bei stark unterschiedlicher Beheizung der Verdampfer- bzw. Dampferzeugerrohre 10, 16, 17 besonders gering gehalten. Auf diese Weise sind Materialermüdungen zuverlässig verhindert, was eine lange Lebensdauer des Dampferzeugers 2 gewährleistet.

Als Mittel zum Reduzieren des Durchflusses des Strömungsmediums S sind ein Teil der Verdampferrohre 10 mit Drosseleinrichtungen ausgestattet, die in der Zeichnung nicht näher dargestellt sind. Die Drosseleinrichtungen sind als den Rohrinnendurchmesser D verkleinernde Lochblenden ausgeführt und bewirken beim Betrieb des Dampferzeugers 2 eine Reduzierung des Durchsatzes des Strömungsmediums S in minderbeheizten Verdampferrohren 10, wodurch der Durchsatz des Strömungsmediums S der Beheizung angepaßt wird. Weiterhin sind als Mittel zum Reduzieren des Durchsatzes des Strömungsmediums S in der zweiten Gruppe 20 der Verdampferrohre 10 der Brennkammer 4 eine oder mehrere in der Zeichnung nicht näher dargestellte Leitungen des Leitungssystems 36 mit Drosseleinrichtungen, insbesondere Drosselarmaturen, ausgestattet.

Bei der Berohrung der Brennkammer 4 ist zu berücksichtigen, daß die Beheizung der einzelnen, miteinander gasdicht verschweißten Verdampferrohre 10 beim Betrieb des Dampferzeugers 2 sehr unterschiedlich ist. Deswegen wird die Auslegung einer Gruppe 18 bzw. 20 der Verdampferrohre 10 hinsichtlich ihrer Innenberippung, Flossenverbindung zu benachbarten Verdampferrohren 10 einer Gruppe 18 bzw. 20 und ihres Rohrinnendurchmessers D so gewählt, daß alle Verdampferrohre 10 einer Gruppe 18 bzw. 20 trotz unterschiedlicher Beheizung annähernd gleiche Austrittstemperaturen aufweisen und eine ausreichende Kühlung aller Verdampferrohre 10 für alle Betriebszustände des Dampferzeugers 2 gewährleistet ist. Dies ist insbesondere dadurch gewährleistet, daß der Dampferzeuger 2 für eine vergleichsweise niedrige Massenstromdichte des die Verdampferrohre 10 durchströmenden Strömungsmediums S ausgelegt ist. Durch eine geeignete Wahl der Flossenverbindungen und der Rohrinnendurchmesser D ist zudem erreicht, daß der Anteil des Reibungsdruckverlusts am Gesamtdruckverlust so gering ist, daß sich ein Naturumlaufverhalten einstellt: Stärker beheizte Verdampferrohre 10 einer Gruppe 18 bzw. 20 werden stärker durchströmt als schwächer beheizte Verdampferrohre 10 einer Gruppe 18 bzw. 20. Damit wird auch erreicht, daß die vergleichsweise stark beheizten Verdampferrohre 10 einer der Gruppen 18 bzw. 20 in Brennernähe spezifisch - bezogen auf den Massenstrom - annähernd ebensoviel Wärme aufnehmen wie die vergleichsweise schwach beheizten Verdampferrohre 10 derselben Gruppe 18 bzw. 20, die im Vergleich dazu näher am Brennkammerende angeordnet sind. Eine weitere Maßnahme, die Durchströmung der Verdampferrohre 10 der Brennkammer 4 an die Beheizung anzupassen, ist der Einbau von Drosseln in einen Teil der Verdampferrohre 10 oder in einen Teil der Leitungen des Leitungssystems 36. Die Innenberippung ist dabei derart ausgelegt, daß eine ausreichende Kühlung der Verdampferrohrwände in beiden Gruppen 18 bzw. 20 der Verdampferrohre 10 sichergestellt ist. Somit weisen mit den oben genannten Maßnahmen alle Verdampferrohre 10 einer Gruppe 18 bzw. 20 annähernd gleiche Austrittstemperaturen auf.

Der Horizontalgaszug 6 weist eine Anzahl von als Schottheizflächen ausgebildeten Überhitzerheizflächen 50 auf, die in hängender Bauweise annähernd senkrecht zur Hauptströmungsrichtung 26 des Heizgases G angeordnet und deren Rohre für eine Durchströmung des Strömungsmediums S jeweils parallel geschaltet sind. Die Überhitzerheizflächen 50 werden überwiegend konvektiv beheizt und sind strömungsmediumsseitig den Verdampferrohren 10 der Brennkammer 4 nachgeschaltet.

Der Vertikalgaszug 8 weist eine Anzahl von überwiegend konvektiv beheizbaren Konvektionsheizflächen 52 auf, die aus annähernd senkrecht zur Hauptströmungsrichtung 26 des Heizgases G angeordneten Rohren gebildet sind. Diese Rohre sind für eine Durchströmung des Strömungsmediums S jeweils parallel geschaltet und in nicht näher dargestellter Weise in den Weg des Strömungsmediums S integriert. Außerdem ist in dem Vertikalgaszug 8 ein Economizer 56 angeordnet. Der Economizer 56 ist ausgangsseitig über ein Leitungssystem 54 an das der ersten Gruppe 18 der Verdampferrohre 10 zugeordnete Eintrittssammler-System 28 angeschlossen. Dabei können eine oder mehrere in der Zeichnung nicht näher dargestellte Leitungen des Leitungssystems 54 Drosselarmaturen zur Reduzierung des Durchflusses des Strömungsmediums S aufweisen. Ausgangsseitig mündet der Vertikalgaszug 8 in einen Luftvorwärmer und von dort über einen Staubfilter in einen Kamin. Die dem Vertikalgaszug 8 nachgeschalteten Bauteile sind in der Zeichnung nicht näher dargestellt.

Der Dampferzeuger 2 ist mit einer horizontalen Brennkammer mit besonders niedriger Bauhöhe ausgeführt und somit mit besonders geringem Herstellungs- und Montageaufwand errichtbar. Hierzu weist die Brennkammer 4 des Dampferzeugers 2 eine Anzahl von Brennern 58 für fossilen Brennstoff B auf, die an der Stirnwand 11 der Brennkammer 4 in der Höhe des Horizontalgaszuges 6 angeordnet sind.

Damit der fossile Brennstoff B zur Erzielung eines besonders hohen Wirkungsgrads besonders vollständig ausbrennt und Materialschäden der heizgasseitig gesehen ersten überhitzerheizfläche 50 des Horizontalgaszuges 6 und eine Verschmutzung derselben, beispielsweise durch Eintrag von schmelzflüssiger Asche mit hoher Temperatur, besonders zuverlässig verhindert sind, ist die Länge L der Brennkammer 4 derart gewählt, daß sie die Ausbrandlänge des Brennstoffs B beim Vollastbetrieb des Dampferzeugers 2 übersteigt. Die Länge L ist dabei der Abstand von der Stirnwand 11 der Brennkammer 4 zum Eintrittsbereich 60 des Horizontalgaszugs 6. Die Ausbrandlänge des Brennstoffs B ist dabei definiert als die Heizgasgeschwindigkeit in horizontaler Richtung bei einer bestimmten mittleren Heizgastemperatur multipliziert mit der Ausbrandzeit $t_A$ des Brennstoffs B. Die für den jeweiligen Dampferzeuger 2 maximale Ausbrandlänge ergibt sich beim Vollastbetrieb des Dampferzeugers 2. Die Ausbrandzeit $t_A$ des Brennstoffs B wiederum ist die Zeit, die beispielsweise ein Kohlenstaubkorn mittlerer Größe zum vollständigen Ausbrennen bei einer bestimmten mittleren Heizgastemperatur benötigt.

Um eine besonders günstige Ausnutzung der Verbrennungswärme des fossilen Brennstoffs B zu gewährleisten, ist die Länge L (angegeben in m) der Brennkammer 4 in Abhängigkeit von der Austrittstemperatur des Heizgases G aus der Brennkammer 4 $T_{BRK}$ (angegeben in °C), der Ausbrandzeit $t_A$ (angegeben in s) des Brennstoffs B und dem BMCR-Wert W (angegeben in kg/s) des Dampferzeugers 2 geeignet gewählt. Dabei steht BMCR für Boiler maximum continuous rating. Der BMCR-Wert W ist ein international üblicherweise verwendeter Begriff für die höchste Dauerleistung eines Dampferzeugers. Diese entspricht auch der Auslegungsleistung, also der Leistung bei Vollastbetrieb des Dampferzeugers. Diese horizontale Länge L der Brennkammer 4 ist dabei größer als die Höhe H der Brennkammer 4. Die Höhe H wird dabei von der Trichteroberkante der Brennkammer 4, in Figur 1 durch die Linie mit den Endpunkten X und Y markiert, bis zu Brennkammerdecke gemessen. Dabei bestimmt sich die Länge L der Brennkammer 4 näherungsweise über die beiden Funktionen (1) und (2)

$$L\ (W,\ t_A)\ =\ (C_1\ +\ C_2\ \cdot\ W)\ \cdot\ t_A \tag{1}$$

$$L\ (W,\ T_{BRK})\ =\ (C_3\ \cdot\ T_{BRK}\ +\ C_4)W\ +\ C_5(T_{BRK})^2\ +\ C_6\ \cdot\ T_{BRK}\ +\ C_7 \tag{2}$$

mit

$C_1$ = 8 m/s       und

$C_2$ = 0,0057 m/kg       und

$C_3$ = -1,905 · 10⁻⁴ (m · s) / (kg°C)       und

$C_4 = 0{,}286 \ (s \cdot m) \, / \, kg$       und

$C_5 = 3 \cdot 10^{-4} \ m \, / \, (°C)^2$       und

$C_6 = -0{,}842 \ m/°C$       und

$C_7 = 603{,}41 \ m.$

Näherungsweise ist hierbei als eine zulässige Abweichung um +20%/-10% vom durch die jeweilige Funktion definierten Wert zu verstehen. Dabei gilt stets bei einem beliebig aber festen BMCR-Wert W des Dampferzeugers der größere Wert aus den Funktionen (1) und (2) für die Länge L der Brennkammer 4.

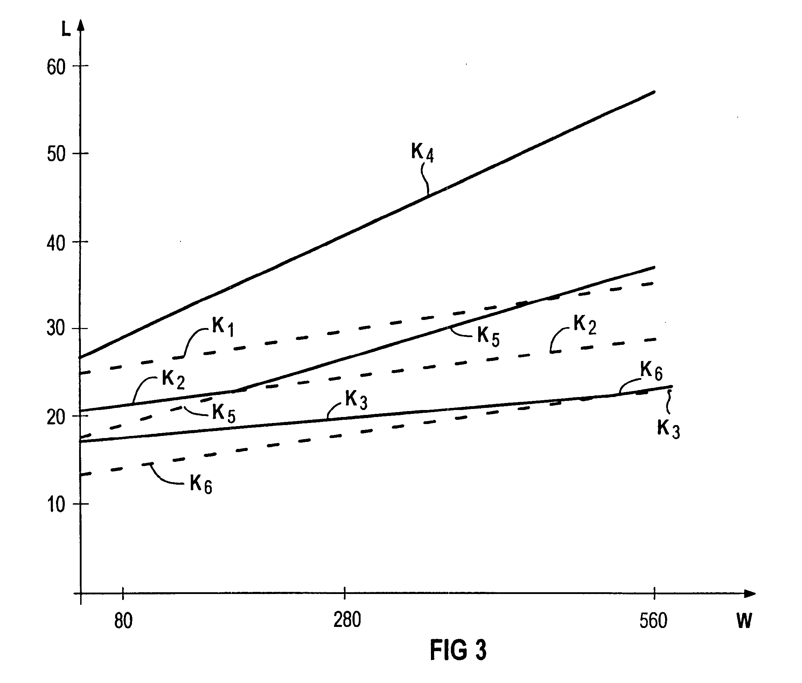

Als Beispiel für eine Berechnung der Länge L der Brennkammer 4 in Abhängigkeit vom BMCR-Wert W des Dampferzeugers 2 sind in das Koordinatensystem gemäß Figur 3 sechs Kurven $K_1$ bis $K_6$ eingezeichnet. Dabei sind den Kurven jeweils folgende Parameter zugeordnet:

$K_1$: $t_A = 3s$      gemäß (1),

$K_2$: $t_A = 2, 5s$      gemäß (1),

$K_3$: $t_A = 2s$      gemäß (1),

$K_4$: $T_{BRK} = 1200°C$      gemäß (2),

$K_5$: $T_{BRK} = 1300°C$      gemäß (2) und

$K_6$: $T_{BRK} = 1400°C$      gemäß (2).

Zur Bestimmung der Länge L der Brennkammer 4 sind somit beispielsweise für eine Ausbrandzeit $t_A = 3s$ und eine Austrittstemperatur $T_{BRK} = 1200°C$ des Heizgases G aus der Brennkammer 4 die Kurven $K_1$ und $K_4$ heranzuziehen. Daraus ergibt sich bei einem vorgegebenen BMCR-Wert W des Dampferzeugers 2

von W = 80 kg/s eine Länge von L = 29 m gemäß $K_4$,

von W = 160 kg/s eine Länge von L = 34 m gemäß $K_4$,

von W = 560 kg/s eine Länge von L = 57 m gemäß $K_4$.

Für die Ausbrandzeit $t_A = 2{,}5s$ und die Austrittstemperatur des Heizgases G aus der Brennkammer $T_{BRK} = 1300°C$ sind beispielsweise die Kurven $K_2$ und $K_5$ heranzuziehen. Daraus ergibt sich bei einem vorgegebenen BMCR-Wert W des Dampferzeugers 2

von W = 80 kg/s eine Länge von L = 21 m gemäß $K_2$,

von W = 180 kg/s eine Länge von L = 23 m gemäß $K_2$ und $K_5$,

von W = 560 kg/s eine Länge von L = 37 m gemäß $K_5$.

Der Ausbrandzeit $t_A = 2s$ und der Austrittstemperatur des Heizgases G aus der Brennkammer $T_{BRK} = 1400°C$ sind beispielsweise die Kurven $K_3$ und $K_6$ zugeordnet. Daraus ergibt sich bei einem vorgegebenen BMCR-Wert W des Dampferzeugers 2

von W = 80 kg/s eine Länge von L = 18 m gemäß $K_3$,

von W = 465 kg/s eine Länge von L = 21 m gemäß $K_3$ und $K_6$,

von W = 560 kg/s eine Länge von L = 23 m gemäß $K_6$.

Beim Betrieb des Dampferzeugers 2 wird den Brennern 58 fossiler Brennstoff B zugeführt. Die Flammen F der Brenner 58 sind dabei horizontal ausgerichtet. Durch die Bauweise der Brennkammer 4 wird eine Strömung des bei der Verbrennung entstehenden Heizgases G in annähernd horizontaler Hauptströmungsrichtung 26 erzeugt. Dieses gelangt über den Horizontalgaszug 6 in den annähernd zum Boden hin ausgerichteten Vertikalgaszug 8 und verläßt diesen in Richtung des nicht näher dargestellten Kamins.

In den Economizer 56 eintretendes Strömungsmedium S gelangt über das Leitungssystem 54 in das Eintrittssammler-System 28 der ersten Gruppe 18 der Verdampferrohre 10 der Brennkammer 4 des Dampferzeugers 2. In der ersten Gruppe 18 der vertikal angeordneten, gasdicht miteinander verschweißten Verdampferrohre 10 der Brennkammer 4 des Dampferzeugers 2 findet die Verdampfung und gegebenenfalls eine teilweise Überhitzung des Strömungsmediums S statt. Der dabei entstehende Dampf bzw. ein Wasser-Dampf-Gemisch wird in dem Austrittssammler-System 32 für Strömungsmedium S gesammelt. Von dort gelangt der Dampf bzw. das Wasser-Dampf-Gemisch über das Leitungssystem 36 in das der zweiten Gruppe 20 der Verdampferrohre 10 zugeordnete Eintrittssammler-System 30. Der in der zweiten Gruppe 20 der Verdampferrohre 10 entstehende Dampf bzw. das Wasser-Dampf-Gemisch gelangt über das Austrittssammler-System 34 in die Wände des Horizontalgaszuges 6 und des Vertikalgaszuges 8 und von dort wiederum in die Überhitzerheizflächen 50 des Horizontalgaszuges 6. In den überhitzerheizflächen 50 erfolgt eine weitere überhitzung des Dampfs, der anschließend einer Nutzung, beispielsweise dem Antrieb einer Dampfturbine, zugeführt wird.

Mit der Gruppenbildung der Verdampferrohre 10 der Brennkammer 4 sind in besonders einfacher Weise besonders geringe Temperaturdifferenzen zwischen benachbarten Verdampferrohren 10 bei allen Lastzuständen des Dampferzeugers 2 gewährleistet. Dadurch sind Temperaturdifferenzen im Eintrittsbereich des Strömungsmediums S zwischen benachbarten Verdampferrohren 10 der Stirnwand 11 und des ersten Bereichs 22 bzw. des ersten Bereichs 22 und des zweiten Bereichs 24 vergleichsweise geringer als wenn die Stirnwand 11 direkt an den zweiten Bereich 24 grenzen würde. Zudem fällt auch die Temperaturdifferenz zwischen mittelbar oder unmittelbar benachbarten Verdampferrohren 10 des zweiten Bereichs 24 und den Dampferzeugerrohren 16 des Horizontalgaszugs 6 vergleichsweise geringer aus als dies ohne eine Reihenschaltung der Gruppen 18 und 20 der Verdampferrohre 10 der Fall wäre.

Dabei ist durch eine Wahl der Länge L der Brennkammer 4 in Abhängigkeit vom BMCR-Wert W des Dampferzeugers 2 sichergestellt, daß die Verbrennungswärme des fossilen Brennstoffs B besonders zuverlässig ausgenutzt wird. Außerdem läßt sich der Dampferzeuger 2 durch seine besonders geringe Bauhöhe und kompakte Bauweise mit besonders geringem Herstellungs- und Montageaufwand errichten. Dabei kann ein mit vergleichsweise geringem technischen Aufwand erstellbares Gerüst vorgesehen sein. Bei einer Dampfturbinenanlage mit dem eine derart geringe Bauhöhe aufweisenden Dampferzeuger 2 können außerdem die Verbindungsrohre von dem Dampferzeuger 2 zu der Dampfturbine besonders kurz ausgelegt sein.

**Patentansprüche**

1.  Dampferzeuger (2) mit einer Brennkammer (4) für fossilen Brennstoff (B), der heizgasseitig über einen Horizontalgaszug (6) ein Vertikalgaszug (8) nachgeschaltet ist, wobei die Brennkammer (4) eine Anzahl von in der Höhe des Horizontalgaszugs (6) angeordneten Brennern (58) umfaßt
    **dadurch gekennzeichnet, daß** die Umfassungswände (9) der Brennkammer (4) aus gasdicht miteinander verschweißten, vertikal angeordneten Verdampferrohren (10) gebildet sind, wobei eine Anzahl der Verdampferrohre (10) in eine erste Gruppe (18) und in eine zweite Gruppe (20) unterteilt ist, wobei die erste Gruppe (18) und die zweite Gruppe (20) der Verdampferrohre (10) jeweils parallel mit Strömungsmedium (S) beaufschlagbar ist und wobei die zweite Gruppe (18) der ersten Gruppe (20) der Verdampferrohre (10) in Strömungsrichtung des Strömungsmediums in Reihe nachgeschaltet ist und bei dem die Umfassungswände (9) der Brennkammer (4) entlang der Hauptströmungsrichtung (26) des Heizgases (G) in einen ersten Bereich (22) und in einen zweiten Bereich (24) unterteilt sind, wobei der erste Bereich (22) aus Verdampferrohren (10) der ersten Gruppe (18) und der zweite Bereich (24) aus Verdampferrohren (10) der zweiten Gruppe (20) gebildet ist und wobei der zweite Bereich (24) heizgasseitig zwischen dem ersten Bereich (22) und dem Horizontalgaszug (6) angeordnet ist.

2.  Dampferzeuger (2) nach Anspruch 1, bei dem sowohl der ersten Gruppe als auch der zweiten Gruppe der Verdampferrohre (10) strömungsmediumsseitig jeweils ein gemeinsames Eintrittssammler-System (28, 30) für Strömungsmedium (S) vorgeschaltet und ein gemeinsames Austrittssammler-System (32, 34) nachgeschaltet ist.

3.  Dampferzeuger (2) nach einem der Ansprüche 1 oder 2, bei dem eine Umfassungswand (9) der Brennkammer (4) die Stirnwand (11) ist, wobei die Verdampferrohre (10) der Stirnwand (9) parallel mit Strömungsmedium (S) beaufschlagbar sind.

4.  Dampferzeuger (2) nach einem der Ansprüche 1 bis 3, bei dem die Verdampferrohre (10) der Stirnwand (11) der Brennkammer (4) strömungsmediumsseitig der ersten Gruppe (18) der Verdampferrohre (10) der Brennkammer (4) vorgeschaltet sind.

5.  Dampferzeuger (2) nach einem der Ansprüche 1 bis 4, bei dem der Rohrinnendurchmesser (D) einer Anzahl der Verdampferrohre (10) der Brennkammer (4) abhängig von der jeweiligen Position der Verdampferrohre (10) in der Brennkammer (4) gewählt ist.

6.  Dampferzeuger (2) nach einem der Ansprüche 1 bis 5, bei dem eine Anzahl der Verdampferrohre (10) auf ihrer Innenseite jeweils ein mehrgängiges Gewinde bildende Rippen (40) tragen.

7.  Dampferzeuger (2) nach Anspruch 6, bei dem ein Steigungswinkel ($\alpha$) zwischen einer zur Rohrachse senkrechten Ebene (42) und den Flanken (44) der auf der Rohrinnenseite angeordneten Rippen (40) kleiner als 60°, vorzugsweise kleiner als 55°, ist.

8.  Dampferzeuger (2) nach einem der Ansprüche 1 bis 7, bei dem eine Anzahl der Verdampferrohre (10) jeweils eine Drosseleinrichtung aufweist.

9. Dampferzeuger (2) nach einem der Ansprüche 1 bis 8, bei dem ein Leitungssystem (19) zur Zuführung von Strömungsmedium (S) in die Verdampferrohre (10) der Brennkammer (4) vorgesehen ist, wobei das Leitungssystem (19) zur Reduzierung des Durchflusses des Strömungsmediums (S) eine Anzahl von Drosseleinrichtungen, insbesondere Drosselarmaturen, aufweist.

10. Dampferzeuger (2) nach einem der Ansprüche 1 bis 9, bei dem die Seitenwände (12) des Horizontalgaszugs (6) aus gasdicht miteinander verschweißten, vertikal angeordneten, parallel mit Strömungsmedium (S) beaufschlagbaren Dampferzeugerrohren (16) gebildet sind.

11. Dampferzeuger (2) nach einem der Ansprüche 1 bis 10, bei dem die Seitenwände (14) des Vertikalgaszugs (8) aus gasdicht miteinander verschweißten, vertikal angeordneten, parallel mit Strömungsmedium (S) beaufschlagbaren Dampferzeugerrohren (17) gebildet sind.

12. Dampferzeuger (2) nach einem der Ansprüche 1 bis 11, bei dem benachbarte Verdampfer- bzw. Dampferzeugerrohre (10, 16, 17) über Flossen gasdicht miteinander verschweißt sind, wobei die Flossenbreite abhängig von der jeweiligen Position der Verdampfer- bzw. Dampferzeugerrohre (10, 16, 17) in der Brennkammer (4) des Horizontalgaszugs (6) und/oder des Vertikalgaszugs (8) gewählt ist.

13. Dampferzeuger (2) nach einem der Ansprüche 1 bis 12, bei dem in dem Horizontalgaszug (6) eine Anzahl von Überhitzerheizflächen (50) in hängender Bauweise angeordnet ist.

14. Dampferzeuger (2) nach einem der Ansprüche 1 bis 13, bei dem in dem Vertikalgaszug (8) eine Anzahl von Konvektionsheizflächen (52) angeordnet ist.

15. Dampferzeuger (2) nach einem der Ansprüche 1 bis 14, bei dem die Brenner (58) an der Stirnwand (11) der Brennkammer (4) angeordnet sind.

16. Dampferzeuger (2) nach einem der Ansprüche 1 bis 15, bei dem die durch den Abstand von der Stirnwand (11) der Brennkammer (4) zum Eintrittsbereich (60) des Horizontalgaszugs (6) definierte Länge (L) der Brennkammer (4) mindestens gleich der Ausbrandlänge des Brennstoffs (B) beim Vollastbetrieb des Dampferzeugers (2) ist.

17. Dampferzeuger nach einem der Ansprüche 1 bis 16, bei dem die Länge (L) der Brennkammer (4) als Funktion des BMCR-Werts (W), der Ausbrandzeit ($t_A$) der Brenner (58) und/oder der Austrittstemperatur ($T_{BRK}$) des Heizgases (G) aus der Brennkammer (4) näherungsweise gemäß den beiden Funktionen (1) und (2)

$$L\ (W,\ t_A)\ =\ (C_1\ +\ C_2\ \cdot\ W)\ \cdot\ t_A \qquad\qquad (1)$$

und

$$L\ (W,\ T_{BRK})\ =\ (C_3\ \cdot\ T_{BRK}\ +\ C_4)\,W\ +\ C_5(T_{BRK})^2\ +\ C_6\ \cdot\ T_{BRK}\ +\ C_7\ \ (2)$$

mit
$C_1 = 8$ m/s           und
$C_2 = 0{,}0057$ m/kg          und
$C_3 = -1{,}905 \cdot 10^{-4}$ (m $\cdot$ s) / (kg°C)          und
$C_4 = 0{,}2857$ (s $\cdot$ m) / kg          und
$C_5 = 3 \cdot 10^{-4}$ m/ (°C)$^2$          und
$C_6 = -0{,}8421$ m/°C          und
$C_7 = 603{,}4125$ m
gewählt ist, wobei für einen BMCR-Wert (W) der jeweils größere Wert der Länge (L) der Brennkammer (4) gilt.

**Claims**

1. Steam generator (2) with a combustion chamber (4) for fossil fuel (B), which is followed on the fuel-gas side, via a horizontal gas flue (6), by a vertical gas flue (8), the combustion chamber (4) comprising a number of burners (58) arranged level with the horizontal gas flue (6), **characterized in that** the containment walls (9) of the combustion chamber (4) are formed from vertically arranged evaporator tubes (10) welded to one another in a gastight manner, a number of the evaporator tubes (10) being subdivided into a first group (18) and a second group (20), the first group (18) and the second group (2) of the evaporator tubes (10) being capable of being acted upon in each case in parallel by flow medium (S), and the second group (18) following the first group (20) of the evaporator tubes (10) in series in the direction of flow of the flow medium, and in which the containment walls (9) of the combustion chamber (4) are subdivided into a first region (22) and a second region (24) in the main direction of flow (26) of the fuel gas (G), the first region (22) being formed from evaporator tubes (10) of the first group (18) and the second region (24) from evaporator tubes (10) of the second group (20), and the second region (24) being arranged, on the fuel-gas side, between the first region (22) and the horizontal gas flue (6).

2. Steam generator (2) according to claim 1, in which both the first group and the second group of the evaporator tubes (10), on the flow-medium side, are preceded in each case by a common inlet header system (28, 30) for flow medium (S) and followed by a common outlet header system (32, 34).

3. Steam generator (2) according to one of claims 1 or 2, in which one containment wall (9) of the combustion chamber (4) is the end wall (11), the evaporator tubes (10) of the end wall (9) being capable of being acted upon in parallel by flow medium (S).

4. Steam generator (2) according to one of claims 1 to 3, in which the evaporator tubes (10) of the end wall (11) of the combustion chamber (4) precede the first group (18) of the evaporator tubes (10) of the combustion chamber (4) on the flow-medium side.

5. Steam generator (2) according to one of claims 1 to 4, in which the tube inside diameter (D) of a number of the evaporator tubes (10) of the combustion chamber (4) is selected as a function of the respective position of the evaporator tubes (10) in the combustion chamber (4).

6. Steam generator (2) according to one of claims 1 to 5, in which a number of the evaporator tubes (10) carry on their inside in each case ribs (40) forming a multiflight thread.

7. Steam generator (2) according to claim 6, in which a pitch angle ($\alpha$) between a plane (42) perpendicular to the tube axis and the flanks (44) of the ribs (40) arranged on the tube inside is smaller than 60°, preferably smaller than 55°.

8. Steam generator (2) according to one of claims 1 to 7, in which a number of the evaporator tubes (10) have in each case a throttle device.

9. Steam generator (2) according to one of claims 1 to 8, in which a line system (19) is provided for supplying flow medium (S) into the evaporator tubes (10) of the combustion chamber (4), the line system (19) having a number of throttle devices, in particular throttle accouterments, for reducing the throughflow of the flow medium (S).

10. Steam generator (2) according to one of claims 1 to 9, in which the side walls (12) of the horizontal gas flue (6) are formed from vertically arranged steam generator tubes (16) welded to one another in a gastight manner and capable of being acted upon in parallel by flow medium (S).

11. Steam generator (2) according to one of claims 1 to 10, in which the side walls (14) of the vertical gas flue (8) are formed from vertically arranged steam generator tubes (17) welded to one another in a gastight manner and capable of being acted upon in parallel by flow medium (S).

12. Steam generator (2) according to one of claims 1 to 11, in which adjacent evaporator or steam generator tubes (10, 16, 17) are welded to one another in a gastight manner via fins, the fin width being selected as a function of the respective position of the evaporator or steam generator tubes (10, 16, 17) in the combustion chamber (4) of the horizontal gas flue (6) and/or of the vertical gas flue (8).

13. Steam generator (2) according to one of claims 1 to 12, in which a number of superheater heating surfaces (50) are arranged in a suspended form of construction in the horizontal gas flue (6).

14. Steam generator (2) according to one of claims 1 to 13, in which a number of convection heating surfaces (52) are arranged in the vertical gas flue (8).

15. Steam generator (2) according to one of claims 1 to 14, in which the burners (58) are arranged on the end wall (11) of the combustion chamber (4).

16. Steam generator (2) according to one of claims 1 to 15, in which the length (L) of the combustion chamber (4), defined by the distance from the end wall (11) of the combustion chamber (4) to the inlet region (60) of the horizontal gas flue (6), is at least equal to the burnup length of the fuel (B) in the full-load operating mode of the steam generator (2).

17. Steam generator according to one of claims 1 to 16, in which the length (L) of the combustion chamber (4) is selected as a function of the BMCR value (W), of the burnup time ($t_A$) of the burners (58) and/or of the outlet temperature ($T_{BRK}$) of the fuel gas (G) from the combustion chamber (4) approximately according to the two functions (1) and (2)

$$L\ (W,\ t_A)\ =\ (C_1\ +\ C_2\ \bullet\ W)\ \bullet\ t_A \qquad\qquad (1)$$

and

$$L\ (W,\ T_{BRK})\ =\ (C_3\ \bullet\ T_{BRK}\ +\ C_4)\,W\ +\ C_5\,(T_{BRK})^2\ +\ C_6\ \bullet\ T_{BRK}\ +\ C_7$$
$$(2)$$

with
$C_1$ = 8 m/s       and
$C_2$ = 0.0057 m/kg        and
$C_3$ = -1.905 • $10^{-4}$ (m • s) / (kg°C)        and
$C_4$ = 0.2857 (s • m) / kg        and
$C_5$ = 3 • $10^{-4}$ m / (°C)$^2$        and
$C_6$ = -0.8421 m/°C        and
$C_7$ = 603.4125 m,
in each case the higher value of the length L of the combustion chamber (4) applying to a BMCR value (W).

**Revendications**

1. Générateur (2) de vapeur, comprenant une chambre (4) de combustion pour du combustible (B) fossile, en aval de laquelle, du côté du gaz chaud, est monté, par un tirant (6) de gaz horizontal, un tirant (8) de gaz vertical, la chambre (4) de combustion comprenant un certain nombre de brûleurs (58) disposés au niveau du tirant (6) de gaz horizontal, **caractérisé en ce que** les parois (9) de délimitation de la chambre (4) de combustion sont formées de tubes (10) d'évaporateur verticaux soudés entre eux d'une manière étanche au gaz, un certain nombre de tubes (10) d'évaporateur étant subdivisés en un premier groupe (18) et en un deuxième groupe (20), le premier groupe (18) et le deuxième groupe (20) des tubes (10) d'évaporateur pouvant être alimentés respectivement en parallèle par un fluide (S) en écoulement et le deuxième groupe (18) étant monté en série en aval du premier groupe (20) des tubes (10) d'évaporateur dans le sens du courant du fluide, et dans lequel les parois (9) de délimitation de la chambre (4) de combustion sont subdivisées le long de la direction (26) principale du courant du gaz (G) chaud en une première partie (22) et en une deuxième partie (24), la première partie (22) étant formée de tubes (10) d'évaporateur du premier groupe (18) et la deuxième partie (24) de tubes (10) d'évaporateur du deuxième groupe (20) et la deuxième partie (24) étant disposée du côté du gaz chaud entre la première partie (22) et le tirant (6) de gaz horizontal.

2. Générateur (2) de vapeur suivant la revendication 1, dans lequel un système (28, 30) commun de collecteur d'entrée du fluide (S) en écoulement et un système (32, 34) commun de collecteur de sortie sont montés respectivement en amont et en aval tant du premier groupe qu'également du deuxième groupe des tubes (10) d'évaporateur du côté du fluide en écoulement.

3. Générateur (2) suivant l'une des revendications 1 ou 2, dans lequel une paroi de délimitation de la chambre (4) de combustion est la paroi (11) avant, le tube (10) d'évaporateur de la paroi (9) avant pouvant être alimenté en parallèle en le fluide (S) en écoulement.

4. Générateur (2) suivant l'une des revendications 1 à 3, dans lequel les tubes (10) d'évaporateur de la paroi (11) avant de la chambre (4) de combustion sont montés en amont du côté du fluide en écoulement du premier groupe (18) des tubes (10) d'évaporateur de la chambre (4) de combustion.

5. Générateur (2) suivant l'une des revendications 1 à 4, dans lequel le diamètre (D) intérieur d'un certain nombre des tubes (10) d'évaporateur de la chambre (4) de combustion est choisi en fonction de la position respective des tubes (10) d'évaporateur dans la chambre (4) de combustion.

6. Générateur (2) suivant l'une des revendications 1 à 5, dans lequel un certain nombre de tubes (10) d'évaporateur portent sur leur face intérieure respectivement des nervures (40) formant un filet à plusieurs pas.

7. Générateur (2) suivant la revendication 6, dans lequel un angle ($\alpha$) d'hélice, entre un plan (42) perpendiculaire à l'axe du tube et les flancs (44) des nervures (40) disposées sur la face intérieure du tube, est plus petit que 60°, de préférence plus petit que 55°.

8. Générateur (2) suivant l'une des revendications 1 à 7, dans lequel un certain nombre des tubes (10) d'évaporateur ont respectivement un dispositif d'étranglement.

9. Générateur (2) suivant l'une des revendications 1 à 8, dans lequel il est prévu un système (19) de conduites pour envoyer du fluide (S) en écoulement dans les tubes (10) d'évaporateur de la chambre (4) de combustion, le système (19) de conduites ayant, pour réduire le débit du fluide (S) en écoulement, un certain nombre de dispositifs d'étranglement, notamment de robinets d'étranglement.

10. Générateur (2) suivant l'une des revendications 1 à 9, dans lequel les parois (12) latérales du tirant (6) de gaz horizontal sont formées de tubes (16) de générateur de vapeur soudés entre eux d'une manière étanche au gaz, disposés verticalement et pouvant être alimentés en parallèle en le fluide (S) en écoulement.

11. Générateur (2) suivant l'une des revendications 1 à 10, dans lequel les parois (14) latérales du tirant (8) de gaz vertical sont formées de tubes (17) de générateur de vapeur soudés entre eux d'une manière étanche au gaz, disposés verticalement et pouvant être alimentés en parallèle en le fluide (S) en écoulement.

12. Générateur (2) suivant l'une des revendications 1 à 11, dans lequel les tubes (10, 16, 17) d'évaporateur ou de générateur de vapeur qui sont voisins sont soudés entre eux d'une manière étanche au gaz par des plats, la largeur des plats étant choisie en fonction de la position respective des tubes (10, 16, 17) d'évaporateur ou de générateur de vapeur dans la chambre (4) de combustion du tirant (6) de gaz horizontal et/ou du tirant (8) de gaz vertical.

13. Générateur (2) suivant l'une des revendications 1 à 12, dans lequel il est monté en construction suspendue un certain nombre de surfaces (50) de surchauffeur dans le tirant (6) de gaz horizontal.

14. Générateur (2) suivant l'une des revendications 1 à 13, dans lequel il est monté un certain nombre de surfaces (52) de chauffage par convexion dans le tirant (8) de gaz vertical.

15. Générateur (2) suivant l'une des revendications 1 à 14, dans lequel les brûleurs (58) sont disposés sur la paroi (11) avant de la chambre (4) de combustion.

16. Générateur (2) suivant l'une des revendications 1 à 15, dans lequel la longueur (L) de la chambre (4) de combustion définie par la distance entre la paroi (11) avant de la chambre (4) de combustion et la partie (60) d'entrée du tirant (6) de gaz horizontal est au moins égale à la longueur de combustion du combustible (B) en fonctionnement à pleine charge du générateur (2) de vapeur.

17. Générateur (2) suivant l'une des revendications 1 à 16, dans lequel la longueur (L) de la chambre (4) de combustion est choisie en fonction de la valeur BMCR (W), de la durée ($t_A$) de combustion du brûleur (58) et/ou de la température ($T_{BRK}$) de sortie du gaz (G) chaud de la chambre (4) de combustion à peu près suivant les deux fonctions (1) et (2)

$$L(W, t_A) = (C_1 + C_2 \cdot W) \cdot t_A \quad (1)$$

et

$$L(W, T_{BRK}) = C_3 \cdot T_{BRK}$$

$$+ C_4)W + C_5(T_{BRK})^2 + C_6 \cdot T_{BRK} + C_7 \quad (2)$$

avec
$C_1 = 8$ m/s et
$C_2 = 0{,}0057$ m/kg et
$C_3 = -1{,}905 \cdot 10^{-4}$ (m . s) / (kg°C) et
$C_4 = 0{,}2857$ (s . m) / kg et
$C_5 = 3 \cdot 10^{-4}$ m/ (°C)$^2$ et
$C_6 = -0{,}8421$ m/°C et
$C_7 = 603{,}4125$ m
en prenant pour une valeur BMCR (W) respectivement la valeur la plus grande de la longueur (L) de la chambre (4) de combustion.

FIG 1

**FIG 2**

**FIG 3**

EP 1 144 911 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3527261 A

**In der Beschreibung aufgeführte Nicht-Patentliteratur**

- **J. FRANKE ; W. KÖHLER ; E. WITTCHOW.** Ver-dampferkonzepte für Benson-Dampferzeuger. *VGB Kraftwerkstechnik,* 1993, vol. 73, 352-360